Europäisches Patentamt

European Patent Office

Office européen des brevets

(19)

(11) Publication number: **0 110 471**
A1

## (12) EUROPEAN PATENT APPLICATION

(21) Application number: 83201644.8

(22) Date of filing: 17.11.83

(51) Int. Cl.³: **F 03 D 9/00**

(30) Priority: 02.12.82 IT 2456082

(71) Applicant: TEMA S.p.A., P.le E.Mattei 1, I-00144 Rome (IT)

(43) Date of publication of application: 13.06.84
Bulletin 84/24

(72) Inventor: Carli, Roberto, Via Feltre 71, I-20134 Milan (IT)

(84) Designated Contracting States: AT BE CH DE FR GB LI LU NL SE

(74) Representative: Roggero, Sergio et al, Ing. Barzanò & Zanardo Milano S.p.A. Via Borgonuovo 10, I-20121 Milano (IT)

(54) Method for converting wind energy into electrical energy, and the apparatus suitable for this purpose.

(57) Wind energy is converted partly into electrical energy in the form of an alternating current of constant frequency by means of a synchronous or asynchronous generator and partly into electrical energy by means of an additional generator, of which the load is made to vary so as to obtain maximum efficiency of the wind rotor in relation to the available wind.

The apparatus comprises a wind rotor connected by a differential gear to a synchronous or asynchronous alternating current generator and to an additional current generator operating at variable speed. The load of the additional generator is regulated in order to obtain maximum wind rotor efficiency.

This invention relates to a method for converting wind energy into electrical energy.

Many methods are known in the art for converting wind energy into electrical energy.

The common drawback of the known methods is that when electrical energy is required to be produced directly in the form of alternating electric current of constant frequency, the wind rotor blade speed must be kept constant or essentially constant.

The main drawback is that the wind rotor efficiency is not optimum under all wind conditions.

Other methods exist for converting wind energy into electrical energy in the form of an electric current of constant frequency which enable the wind rotor to operate at variable speed, but which require means for converting the direct or variable frequency alternating electric current into alternating electric current of constant frequency.

This leads to a considerable loss during the frequency conversion.

It has been surprisingly found possible to allow the wind rotor to operate at variable speed while obtaining alternating current of constant frequency.

A first subject matter of the present invention is a method for converting wind energy into electrical energy in the form of an alternating current of constant frequency, consisting of the following stages:

1) transferring the wind energy to the blades of a wind rotor;

2) transmitting the motion of the wind rotor to a differential gear having three shafts, one of which receives the energy from the wind rotor;

3)    transmitting the motion from the second shaft of the differential gear to a main synchronous or asynchronous alternating current generator operating at mains frequency, the rotor of which rotates at constant or essentially constant speed;

4)    transmitting the motion from the third shaft to a second current generator (additional generator) operating at variable speed, the rotor of said second current generator having a rotational speed which is variable and controllable in accordance with the wind conditions.

The load of the second generator is controlled in such a manner that its rotor assumes a rotational speed which, knowing the internal transmission ratios of the differential gear, enables the wind rotor to assume its optimum rotational speed as the wind speed conditions change.

For every wind rotor there is an optimum ratio of wind rotor rotational speed to wind speed.

The method according to the invention enables the wind rotor to operate under optimum conditions, enables electrical energy to be obtained at constant frequency, and finally enables additional electrical energy to be obtained.

The additional electrical energy can obviously be converted into heat or alternating electrical energy of constant frequency, or can be used for any other purpose.

The method according to the invention, when compared with known methods employing alternating current generation at constant

- 3 -

0110471

frequency, allows optimum utilisation of the wind rotor, which is not possible with said known methods, and when compared with known methods for generating alternating current at variable frequency or direct current it gives improved efficiency and costs in that only a fraction of the generated power needs to undergo frequency conversion.

A second subject matter of the present invention is an apparatus for implementing the method heretofore described.

The apparatus according to the invention comprises a wind rotor connected directly or indirectly by way of a motion transmission shaft to a differential gear, the transmission shaft being one of the shafts of the differential gear, a constant frequency alternating current electrical generator connected directly or indirectly to the spider of the differential gear by way of the generator rotor shaft, an additional electric current generator connected directly or indirectly to the second shaft of the differential gear, and finally a system for controlling the load of the additional generator which regulates the rotational speed of the additional generator rotor in such a manner as to obtain the optimum ratio of wind rotor rotational speed to wind speed.

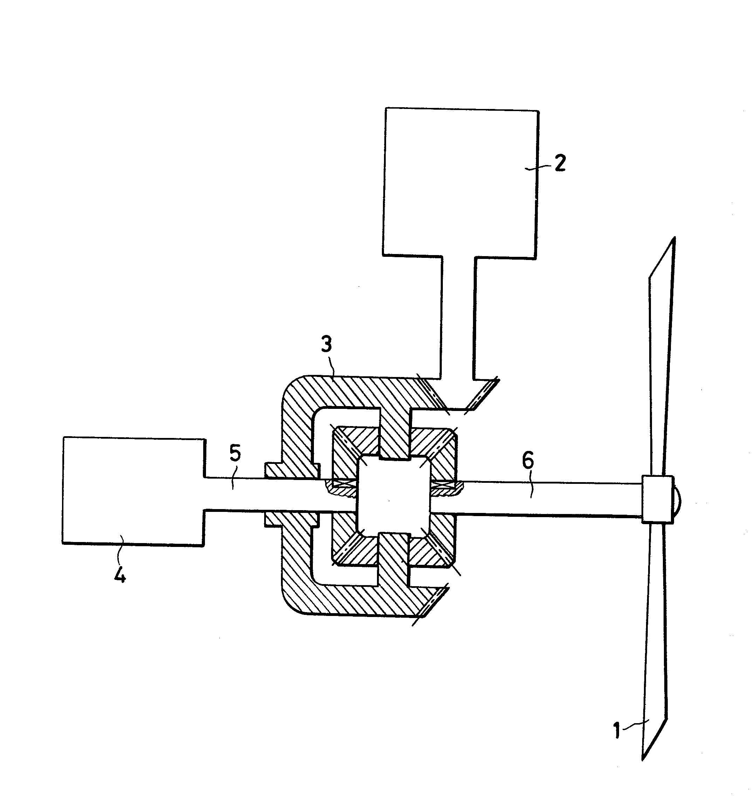

The apparatus according to the present invention can be represented by the diagram of the accompanying figure, which is not to be taken as limitative of the invention itself.

In it the reference numeral 1 indicates a wind rotor, 2 a constant frequency alternating current electrical generator connected by its rotor shaft to the spider of the differential gear 3 (epicyclic gear), and 4 the additional generator, the two shafts 5 and 6 of the epicyclic gear being connected to the wind rotor 1 and to the additional generator 4.

The additional generator 4 can be chosen in such a manner as to be able to also operate as a motor when the wind conditions require it.

- 1 -

CLAIMS:

1.      A method for converting wind energy into electrical energy, characterised by consisting of the following stages:

a)    transferring the wind energy to the blades of a wind rotor;

b)    transmitting the motion of the wind rotor to a differential gear having three shafts, of which a first shaft receives the energy from the wind rotor;

c)    transmitting the motion from the second shaft of the differential gear to a main alternating current generator operating at mains frequency, the rotor of which rotates at constant or essentially constant speed;

d)    transmitting the motion from the third shaft to an additional current generator operating at variable speed.

2.      A method for converting wind energy into electrical energy as claimed in claim 1, characterised in that the main alternating current generator is a synchronous generator.

3.      A method for converting wind energy into electrical energy as claimed in claim 1, characterised in that the main alternating current generator is an asynchronous generator.

4.      A method for converting wind energy into electrical energy as claimed in claim 1, characterised in that the additional current generator operating at variable speed has its load controlled in such a manner that the wind rotor assumes a rotational speed which is optimum for the wind speed.

5.      An apparatus for implementing the method as claimed in claims 1 to 4, characterised by comprising a wind rotor connected directly or indirectly by way of a motion transmission shaft to

0110471

a differential gear, the transmission shaft being one of the two shafts of the differential gear, a constant frequency alternating current electrical generator connected directly or indirectly to the spider of the differential gear by way of the generator rotor shaft, an additional electric current generator connected directly or indirectly to the second shaft of the differential gear, and finally a system for controlling the additional generator load.

0110471

European Patent
Office

**EUROPEAN SEARCH REPORT**

Application number

EP 83 20 1644

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | NL-A-7 514 750  (STICHTING REACTOR CENTRUM) * Page 3, line 16 through whole description * | 1,5 | F 03 D 9/00 |
| A | DE-C- 811 580 (SIEMENS-SCHUCKERT) * Page 2, lines 53-102 * | 1,5 | |
| A | GB-A-2 055 259 (DVORAK) * Page 1, line 95 through whole description * | 1 | |
| A | AT-B- 98 091 (SIEMENS-SCHUCKERT) * Description * | 1 | |
| A | PATENTS ABSTRACTS OF JAPAN, vol. 5, no. 171(E-80)(843), 30th October 1981 & JP - A - 56 98400 (MITSUBISHI DENKI K.K.) 07-08-1981 * Abstract * | 4 | TECHNICAL FIELDS SEARCHED (Int. Cl. ³)  F 03 D |
| A | WO-A-8 101 444  (NYGREN) * Page 3, line 28 - page 4, line 31 * | 1,2,5 | |
| A | US-A-4 239 977  (STRUTMAN) * Column 2, line 38 - column 3, line 61 * | 1,2,5 | |

--- -/-

The present search report has been drawn up for all claims

| Place of search | Date of completion of the search | Examiner |
|---|---|---|
| THE HAGUE | 29-02-1984 | DE WINTER P.E.F. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | SOLAR ENERGY, vol. 20, pages 109-117, Pergamon Press, GB. R. RAMAKUMAR: "Wind-electric conversion utilizing field modulated generator systems" * Pages 109-115, line 19 * | 3,4 | |

TECHNICAL FIELDS SEARCHED (Int. Cl. ³)

The present search report has been drawn up for all claims

| Place of search | Date of completion of the search | Examiner |
|---|---|---|
| THE HAGUE | 29-02-1984 | DE WINTER P.E.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82